# FASCICULE DE BREVET EUROPEEN

(11) **EP 0 848 828 B1**
(45) Date de publication et mention de la délivrance du brevet: **02.06.1999**
(21) Numéro de dépôt: 96930223.1
(22) Date de dépôt: 06.09.1996
(51) Int. Cl.: G01S 5/00, H01Q 1/12

(54) **SYSTEME D'INITIALISATION AUTONOME DE LIAISONS SPATIALES DIRECTIVES**
SYSTEM ZÜR SELBSTÄNDIGER INITIALISIERUNG EINER RICHTSTRAHLVERBINDUNG
SELF-CONTAINED INITIALISATION SYSTEM FOR DIRECTIONAL SPACE LINKS

(30) Priorité: 07.09.1995 FR 9510480
(43) Date de publication de la demande: 24.06.1998
(73) Titulaire: CENTRE NATIONAL D'ETUDES SPATIALES, F-75039 Paris Cedex 01 (FR)
(72) Inventeur: ISSLER, Jean-Luc, F-31400 Toulouse (FR)
(74) Mandataire: Des Termes, Monique
(86) Numéro de dépôt international: FR9601369
(87) Numéro de publication internationale: WO9709634

(56) Documents cités:
- US-A- 5 274 382
- GPS WORLD, vol. 4, no. 6, Juin 1993, pages 32-38, XP002004333 UNWIN ET AL: "FOUND IN SPACE: TRACKING MICROSATELLITES WITH GPS" cité dans la demande

## Description

### Domaine technique

La présente invention concerne un système d'initialisation autonome de liaisons spatiales directives, notamment pour petits satellites.

### Etat de la technique antérieure

Lorsqu'un satellite, par exemple un petit satellite, est placé en orbite, ses paramètres orbitaux sont déterminés en général par un réseau sol de radars de poursuite, comme par exemple le NORAD aux USA, tel que décrit notamment dans la référence [1].

Ces éléments orbitaux sont ensuite communiqués par l'opérateur du réseau de radars à l'opérateur du satellite qui se trouve donc dépendant du premier opérateur. Une fois ces éléments orbitaux connus, l'opérateur du satellite peut définir les paramètres de pointage des antennes sol directives, afin d'établir une liaison haut débit avec le satellite.

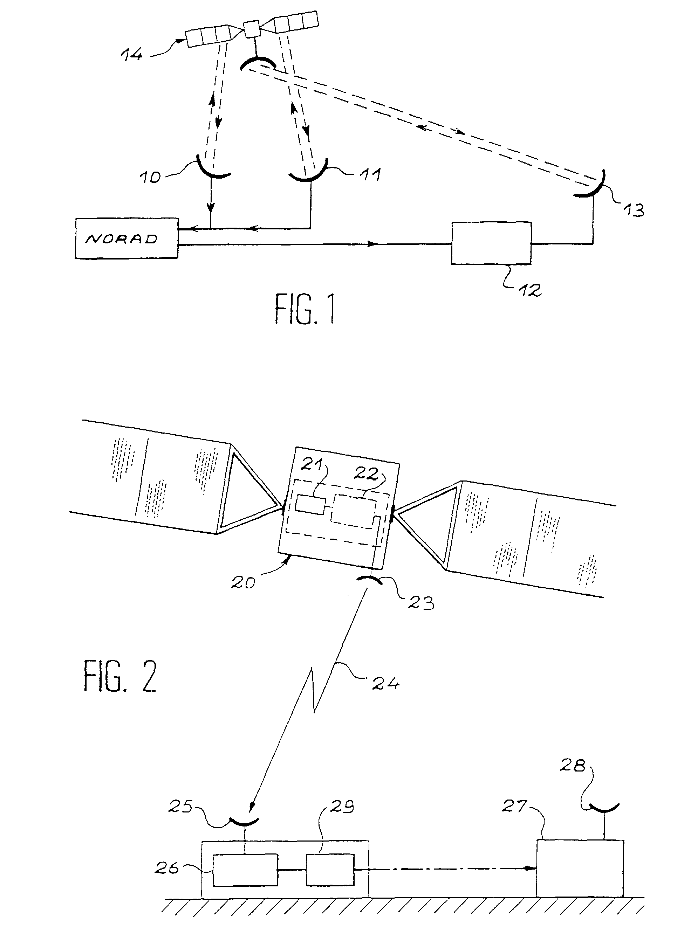

Ainsi sur la figure 1, le réseau NORAD est relié d'une part à deux radars 10 et 11, et d'autre part à un opérateur de satellite 12 relié lui-même à une antenne 13 de pointage en bande S.

Les radars 10 et 11 permettent une mesure de la distance et de la vitesse d'un satellite 14. L'opérateur 12 reçoit du réseau NORAD les éléments orbitaux dudit satellite 14.

Un récepteur de radionavigation classique, qui n'est pas muni d'un dispositif d'initialisation autonome, est décrit dans la référence [2] . Ce récepteur doit être initialisé à l'aide de paramètres orbitaux provenant d'un réseau de poursuite tel que le NORAD.

Mais, par ailleurs, le lancement d'un satellite est alors dépendant de l'opérateur du réseau de poursuite. L'orbite peut être parfois fournie à l'opérateur du satellite avec des délais pénalisants (l'orbite du satellite peut parfois être connue plusieurs jours après le lancement). On risque de ne pas pouvoir sauver un satellite en cas de problème si une réaction quasi-immédiate est nécessaire, et que les paramètres orbitaux doivent être connus.

### Exposé de l'invention

La présente invention concerne un système d'initialisation autonome de liaisons spatiales directives entre un satellite et au moins une antenne directive d'une station terrestre, caractérisé en ce qu'il comprend :
- à bord du satellite, un récepteur muni d'un navigateur comprenant un dispositif d'initialisation autonome, fournissant les paramètres orbitaux dudit satellite, suivi d'un formateur de données en série modulant un signal émis à l'aide d'une antenne à couverture hémisphérique en direction de la terre ;
- en liaison avec une station terrestre, une antenne non directive permettant de recevoir périodiquement les données d'orbite contenues dans ledit signal, lors des passages du satellite en visibilité de ladite station ;
- une unité de calcul reliée à cette station terrestre permettant de calculer les paramètres de pointage de chaque antenne directive qui sont transmis à la station terrestre en liaison avec cette antenne directive.

Avantageusement le signal émis par le satellite est un signal UHF ou VHF. Le satellite est un petit satellite. Le récepteur embarqué est un récepteur GPS ou DORIS.

Avantageusement le système de l'invention permet, à terre, de connaître l'orbite du satellite uniquement à l'aide de moyens connus existant dans le satellite. Aucun moyen spécifique externe n'est nécessaire : il n'y a par exemple pas nécessité de radars de poursuite. Aucun contrôle d'accès n'est actuellement nécessaire pour utiliser les références émettrices des systèmes comme GPS ou DORIS.

Les paramètres orbitaux du satellite peuvent être aussi calculés à l'aide de senseurs astronomiques (solaire, de terre, stellaire, ..). Ces senseurs fournissent la direction de visée des astres observés. Ces directions de visée sont utilisées pour le calcul d'orbite.

On peut également utiliser des senseurs magnétométriques qui permettent, en mesurant le champ magnétique terrestre, de connaître l'orbite du satellite.

L'orbite peut être déterminée dans le calculateur du senseur de mesure utilisé, (cas de certains récepteurs GPS ou DORIS comme il est décrit dans la référence [3]), ou dans le calculateur de bord du satellite

Le système de l'invention permet de réaliser une économie de coût dans l'exécution des opérations liées à la détermination d'orbite de satellites, et notamment de petits satellites : notamment dans le fait de se passer d'un segment de sol spécifique pour localiser le satellite.

Il n'y a également plus nécessité de complexifier le récepteur de télémesure-télécommande pour faire des mesures de distance ou de datation : un récepteur de télémesure-télécommande classique est suffisant. L'utilisation d'un transpondeur n'est plus nécessaire. Il peut donc être supprimé.

Dans le cas ou le satellite émet un signal en spectre étalé dans la bande VHF ou UHF à destination des stations de réception non directives, cette liaison peut être utilisée par un système de mesure du contenu électronique total de la ionosphère.

### Brève description des dessins

- La figure 1 illustre un système de l'art antérieur ;
- la figure 2 illustre le système selon l'invention ;
- la figure 3 illustre un exemple classique de réalisation d'un segment bord ;
- la figure 4 illustre le chronogramme de fonctionnement du système selon l'invention.

### Exposé détaillé de modes de réalisation

Selon l'invention on place à bord d'un satellite un récepteur GPS ou autre équipement de navigation muni d'un navigateur fournissant les paramètres orbitaux du porteur de façon autonome. Un dispositif d'initialisation autonome du navigateur est décrit dans la référence [4] . On peut éviter la dépendance de l'opérateur du satellite vis-à-vis de l'opérateur du réseau de radars. On connecte le récepteur GPS à un segment bord (éventuellement via un formateur de données). Les paramètres orbitaux font donc partie du message transmis, par exemple en VHF, en direction de stations sol non directives, n'ayant donc pas besoin d'être pointées vers le satellite au préalable pour établir la liaison spatiale. Les paramètres de pointage des antennes directives sont ensuite calculés et transmis aux stations concernées.

Ainsi sur la figure 2 est représenté un minisatellite 20 qui comprend un récepteur GPS 21 relié au segment bord 22 qui comprend un générateur de message linéaire et éventuellement un formateur de données en série.

Le segment bord 22 est relié à une antenne 23 à couverture hémisphérique. Le signal VHF 24 émis par cette antenne 23 est reçu par une antenne non directive 25 d'une station sol 26 reliée à un centre de calcul 29, elle-même connectée à une station sol, par exemple en bande S 27, ayant une antenne directive 28. Le centre de calcul 29 transmet les paramètres orbitaux du satellite 20 à la station 27.

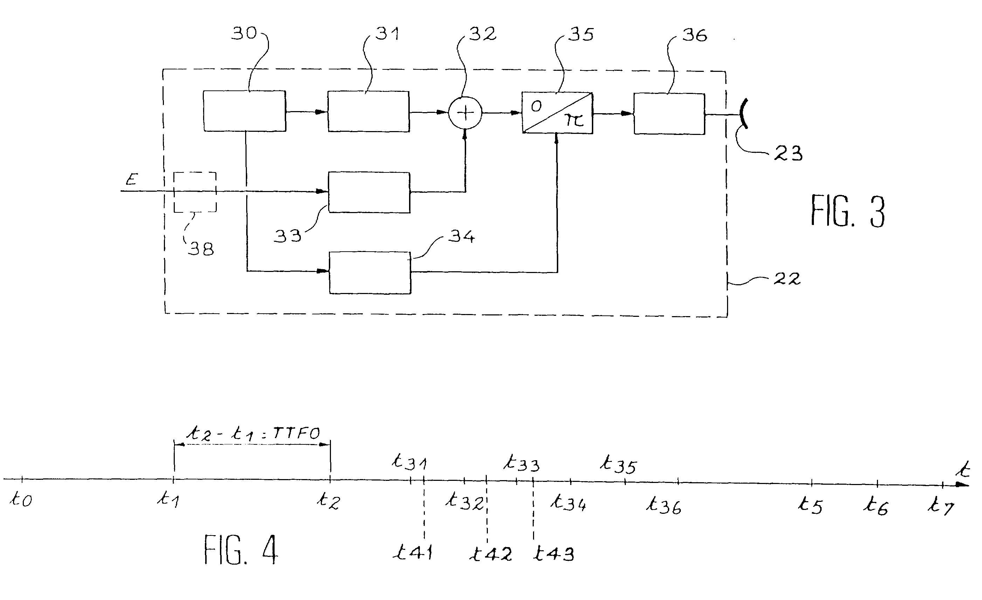

La figure 3 illustre un exemple classique de réalisation d'un segment bord 22.

L'oscillateur 30 est relié à un générateur de code pseudo-aléatoire 31, lui-même relié à un sommateur 32, qui reçoit sur une autre entrée un signal provenant d'un générateur de message binaire 33 dont le signal d'entrée est référencé E.

L'oscillateur 30 est également relié à un générateur de signal VHF 34. Un modulateur O/π 35 reçoit les sorties du sommateur 32 et du générateur 34.

Un émetteur 36 reçoit le signal de sortie de ce modulateur 35 et est relié à l'antenne 23.

Eventuellement un formateur 38 peut être positionné sur l'entrée du générateur 33.

Sur le chronogramme de fonctionnement de la figure 4, sont représentés les instants suivants :
- t0 :: lancement du satellite
- t1 :: mise sous tension du récepteur de navigation
- t2 :: instant de calcul des premiers paramètres orbitaux valides
- t3i :: instants de transmission des paramètres orbitaux (calculés en temps réel) vers le sol
- t4i :: instants de réception des paramètres orbitaux par une station à antenne non directive 26
- t5 :: instant où les premiers paramètres orbitaux sont reçus par le centre de calcul d'orbite et d'opération 29, chargé de déterminer les directions de pointage des antennes directives 28 (en bande S, par exemple)
- t6 :: instant de transmission des paramètres de désignation des stations 26 aux stations 27 munies d'antennes directives
- t7 :: instant d'établissement des liaisons directives avec le satellite 20
avec :
- t2-t1 =: TTFO (Time To First Orbit) # 30 mn (pour le récepteur GPS placé à bord du satellite HETE, par exemple)

### REFERENCES

[1] [1]Jane's radar and electronic Warfare systems, second edition, edited by Bernard Blake, 1990-91
[2] "Found in Space : Tracking Microsatellites with GPS" de M. Unwin et Y. Hashida (GPS World, juin 1993, pages 32 à 38)
[3] "Expérience de navigation autonome pour mini satellites" de F. Alby et F. Nouel (Symposium international, 27 juin-1er juillet 1994, Biarritz)
[4] "Orbital Navigation with a GPS Receiver on the H.E.T.E. Spacecraft" de J.L. Issler, M. Tello, R. Mesnard, E. Péragin, G. Ricker, F. Martel, A. Auphan, G. Caillet, C. Mehlen, C. Valpard (The Institute of Navigation, 1994 National Technical Meeting, 24-26 janvier 1994)

## Revendications

1. Système d'initialisation autonome de liaisons spatiales directives entre un satellite (20) et au moins une antenne directive (28) d'une station terrestre (27), caractérisé en ce qu'il comprend :
- à bord du satellite (20), un récepteur (21) muni d'un navigateur comprenant un dispositif d'initialisation autonome, fournissant les paramètres orbitaux dudit satellite, suivi d'un formateur de données en série modulant un signal (24) émis à l'aide d'une antenne à couverture hémisphérique (23) en direction de la terre ;
- en liaison avec une station terrestre (26), une antenne non directive (25) permettant de recevoir périodiquement les données d'orbite contenues dans ledit signal (24), lors des passages du satellite en visibilité de ladite station ;
- une unité de calcul (29) reliée à cette station terrestre (26) permettant de calculer les paramètres de pointage de chaque antenne directive (28) qui sont transmis à la station terrestre (27) en liaison avec cette antenne directive.

2. Système selon la revendication 1, caractérisé en ce que le signal (24) émis par le satellite (20) est un signal UHF ou VHF.

3. Système selon la revendication 1, caractérisé en ce que le satellite est un petit satellite.

4. Système selon la revendication 1, caractérisé en ce qu'il comprend des senseurs astronomiques pour calculer les paramètres orbitaux du satellite.

5. Système selon la revendication 4, caractérisé en ce que ces senseurs astronomiques sont du type solaire, de terre ou stellaire.

6. Système selon la revendication 1, caractérisé en ce qu'il comprend des senseurs magnétométriques.

7. Système selon la revendication 1, caractérisé en ce que le récepteur est un récepteur GPS.

## Patentansprüche

1. System zur selbständigen Initialisierung einer Richtstrahlverbindung zwischen einem Satelliten (20) und wenigstens einer Richtantenne bzw. gerichteten Antenne (28) einer Bodenstation (27),
**dadurch gekennzeichnet**, daß es umfaßt:
- an Bord des Satelliten (20) einen Empfänger (21), ausgestattet mit einer Navigationseinrichtung, die eine selbständige Initialisierungsvorrichtung umfaßt, die die Umlaufbahn-Parameter des genannten Satelliten liefert, gefolgt von einem seriellen Datenformer, der ein Signal (24) moduliert, das mit Hilfe einer Antenne (23) mit hemisphärischer Ausleuchtung bzw. Abdeckung in Richtung Erde gesendet wird;
- in Verbindung mit einer Bodenstation (26) eine nicht-gerichtete Antenne (25), die ermöglicht, periodisch die in dem genannten Signal (24) enthaltenen Umlaufbahndaten zu empfangen, während der Durchläufe des Satelliten in Sichtweite der genannten Station;
- eine Recheneinheit (29), verbunden mit dieser Bodenstation (26), die ermöglicht, die Ausrichtungsparameter jeder Richtantenne (28) zu berechnen, die an die mit dieser Richtantenne verbundene Bodenstation (27) übertragen werden.

2. System nach Anspruch 1, dadurch gekennzeichnet, daß das durch den Satelliten (20) übertragene Signal (24) ein UHF- oder ein VHF-Signal ist.

3. System nach Anspruch 1, dadurch gekennzeichnet, daß der Satellit ein Kleinsatellit ist.

4. System nach Anspruch 1, dadurch gekennzeichnet, daß es zum Berechnen der Umlaufbahnparameter des Satelliten astronomische Sensoren umfaßt.

5. System nach Anspruch 4, dadurch gekennzeichnet, daß diese astronomische Sensoren vom Sonnen-, Erd- oder Sternentyp sind.

6. System nach Anspruch 1, dadurch gekennzeichnet, daß es magnetometrische Sensoren umfaßt.

7. System nach Anspruch 1, dadurch gekennzeichnet, daß der Empfänger ein GPS-Empfänger ist.

## Claims

1. System for the autonomous initialization of directional space links between a satellite (20) and at least one directional antenna (28) of an earth station (27), characterized in that it comprises:
- on board the satellite (20), a receiver (21) equipped with a navigator having an autonomous initialization device, supplying orbital parameters of said satellite, followed by a series data formatter modulating a signal (24) emitted with the aid of a hemispherical coverage antenna (23) in the direction of the earth,
- in conjunction with a non-directional earth station (26), a non-directional antenna (25) making it possible to periodically receive the orbital data contained in said signal (24), when the satellite passes within the vision of said station,
- a calculating unit (29) connected to said earth station (26) making it possible to calculate the pointing parameters of each directional antenna (28), which are transmitted to the earth station (27) in conjunction with said directional antenna.

2. System according to claim 1, characterized in that the signal (24) emitted by the satellite (20) is a UHF or VHF signal.

3. System according to claim 1, characterized in that the satellite is a small satellite.

4. System according to claim 1, characterized in that it comprises astronomical sensors for calculating the orbital parameters of the satellite.

5. System according to claim 4, characterized in that the astronomical sensors are of the solar, terrestrial or stellar type.

6. System according to claim 1, characterized in that it comprises magnetometric sensors.

7. System according to claim 1, characterized in that the receiver is a GPS receiver.
